# DEMANDE DE BREVET EUROPEEN

(11) **EP 4 008 459 A1**
(43) Date de publication de la demande: **08.06.2022**
(21) Numéro de dépôt: 21212656.9
(22) Date de dépôt: 06.12.2021
(51) Int. Cl.: B23B 29/02, B23P 15/28, B33Y 80/00, B23D 77/04

(54) **OUTIL D'USINAGE À DOUBLE CORPS TUBULAIRE, ET PROCÉDÉ DE FABRICATION D'UN TEL OUTIL**

(30) Priorité: 07.12.2020 FR 2012796
(71) Demandeur: Process Conception Ingénierie-Société de Construction d'équipements, de Mécanisation Et de Machines, 42100 Saint-Etienne (FR)
(72) Inventeur: MUNOZ, Jordan, 42170 Saint-Just-Saint-Rambert (FR); MASSARD, Quentin, 42330 Cuzieu (FR)
(74) Mandataire: INNOV-GROUP

(57) **Abrégé**

Outil d'usinage (1) comportant un corps comprenant :
- une portion tubulaire centrale (9) formant un conduit centré sur l'axe longitudinal (L) ;
- une portion tubulaire périphérique (10) qui est coaxiale à la portion tubulaire centrale (9) et qui entoure la portion tubulaire centrale (9) ;
- un premier étage d'usinage comportant un premier bras (12A) et un deuxième bras (12B) qui s'étendent de part et d'autre de la portion tubulaire centrale (9), le premier bras (12A) et le deuxième bras (12B) comportant chacun à leur extrémité un organe d'usinage (3), le premier bras (12A) et deuxième bras (12B) étant chacun solidaire de la portion tubulaire centrale (9) et de la portion tubulaire périphérique (10) ;
- une embase (6) ;
la portion tubulaire périphérique (10) comporte au moins une arche de liaison (16) reliant le premier bras (12A) et le deuxième bras (12B) en contournant la portion tubulaire centrale (9).

## Description

### DOMAINE TECHNIQUE

L'invention concerne le domaine des procédés de fabrication par usinage et concerne plus particulièrement un outil d'usinage adapté à être monté sur la broche d'une machine-outil.

Les procédés d'usinage, et notamment les procédés par enlèvement de copeaux, sont bien connus et très répandus dans l'industrie pour la production de pièces aussi bien métalliques que dans d'autres matériaux usinables.

### ART ANTÉRIEUR

Il existe des outils d'usinage comportant un corps s'étendant selon un axe longitudinal et supportant des organes d'usinage qui sont généralement des plaquettes d'usinage présentant une arête de coupe. Un tel outil d'usinage est en général entrainé en rotation autour de son axe longitudinal et permet l'ébauche ou la finition d'un usinage au sein d'une pièce mécanique en cours de fabrication.

Les outils d'usinage destinés notamment à la réalisation d'un alésage de grand diamètre sont généralement des pièces massives, et présentent ainsi une importante inertie qui a un effet négatif sur les cadences de fabrication ainsi que sur la qualité d'usinage.

Ces outils d'usinage soufrent de plus d'un cout de fabrication élevé, tant en matière qu'en cout des nombreuses opérations nécessaires à la réalisation de leurs formes complexes.

### EXPOSÉ DE L'INVENTION

L'invention a pour but d'améliorer les outils d'usinage de l'art antérieur.

À cet effet, l'invention vise un outil d'usinage comportant : un corps s'étendant selon un axe longitudinal autour duquel l'outil d'usinage est destiné à être mis en rotation relative par rapport à une pièce à usiner ; et au moins un organe d'usinage solidaire du corps. Le corps comporte :
- une portion tubulaire centrale formant un conduit centré sur l'axe longitudinal ;
- une portion tubulaire périphérique qui est coaxiale à la portion tubulaire centrale et qui entoure la portion tubulaire centrale ;
- un premier étage d'usinage comportant un premier bras et un deuxième bras qui s'étendent de part et d'autre de la portion tubulaire centrale, le premier bras et le deuxième bras comportant chacun à leur extrémité un organe d'usinage, le premier bras et deuxième bras étant chacun solidaire de la portion tubulaire centrale et de la portion tubulaire périphérique ;
- une embase reliant la portion tubulaire centrale et la portion tubulaire périphérique, cette embase comportant des moyens de fixation sur une broche de machine-outil.

De plus, la portion tubulaire périphérique comporte au moins une arche de liaison reliant le premier bras et le deuxième bras en contournant la portion tubulaire centrale.

L'organe d'usinage est ici défini comme un élément comportant au moins une arête de coupe telle que les plaquettes d'usinage couramment utilisées dans ce domaine. Il peut s'agir par exemple de plaquettes réalisées en carbure et fixées sur le corps, ou encore d'éléments en acier rapide rapportés sur le corps, de plaquettes d'usinage brasées, etc. L'organe d'usinage est l'élément qui vient au contact de la pièce à usiner et qui, par son arête de coupe, enlève le copeau.

L'adjectif « tubulaire » est ici défini comme englobant toute formes de tubes cylindriques, quelle que la forme de leur base (circulaire, carrée, ou autre), et comportant éventuellement des changements de section ou des portions ajourées. De préférence, la portion tubulaire centrale est un tube dont la paroi interne est un cylindre à base circulaire, et la portion tubulaire périphérique est un tube dont la paroi interne est un cylindre à base circulaire qui est ajouré, c'est-à-dire qui comporte des fenêtres traversant sa paroi.

Un tel outil d'usinage bénéficie d'une masse réduite et donc d'une faible inertie dans cadre d'un usinage avec mise en rotation de cet outil. La typologie de l'outil d'usinage selon l'invention est cependant particulièrement adaptée à la réalisation d'alésages de grand diamètre en permettant une qualité optimale d'usinage. L'invention conduit à un outil d'usinage qui bénéficie à la fois d'une masse réduite et d'une capacité à l'usinage de grandes pièces. Dans ce contexte, l'allègement d'un outil d'usinage de grandes dimension procure un important gain en matière d'ergonomie (par exemple pour un opérateur chargé de fixer l'outil d'usinage en bout de broche sur une machine-outil).

Même pour des diamètres d'alésage de l'ordre de 300 à 500 millimètres dans des pièces en matériau de dureté élevée (tel que l'acier), l'outil d'usinage présente la tenue mécanique permettant un usinage conforme ainsi que l'usinage de plusieurs alésages simultanés, grâce à la tenue en torsion et en vibrations permise par la structure tubulaire double du corps de l'outil d'usinage, ainsi que grâce à l'optimisation du moment quadratique obtenue par une telle structure. Une optimisation de l'usinage est également obtenue par une augmentation générale de la rigidité de l'outil d'usinage.

L'invention est particulièrement adaptée à la réalisation d'un outil d'usinage monobloc, qui bénéficie ainsi d'une homogénéisation des contraintes générée en cours d'usinage.

L'outil d'usinage nécessite une faible quantité de matière pour sa réalisation, au vu des diamètres pouvant être réalisés, ce qui participe à abaisser son cout de fabrication, en plus de son allègement et d'une meilleure dynamique de coupe obtenue en conséquence.

L'outil d'usinage est de plus adapté à de nombreuses configurations de multi-usinage, car il permet, en prévoyant plusieurs étages d'usinage, d'usiner simultanément des alésages de plusieurs diamètres différents au sein d'une même pièce avec une même référence de prise de pièce, évitant ainsi les dispersions relatives à une reprise de pièce. La configuration des bras de l'outil d'usinage rend également l'outil modulaire, en prévoyant des étages d'usinage avec des bras qui peuvent être alignés ou non alignés, parallèles ou non parallèles (par exemple, formant un V). L'outil d'usinage selon l'invention peut, en plus de divers étages d'usinage possibles, comporter une tête d'usinage adaptée à usiner un alésage de faible diamètre conjointement aux autres usinages réalisés par les différents étages d'usinage, cet alésage de faible diamètre pouvant constituer une référence pour les alésages de grand diamètre. En variante, cet alésage de faible diamètre peut consister en un perçage, ou en l'usinage d'une paroi de fond. La portion tubulaire peut être mise à profit pour supporter, à son extrémité, cette tête d'usinage.

L'outil d'usinage selon l'invention est également particulièrement avantageux pour les procédés d'usinage nécessitant l'emploi d'un fluide d'usinage. La portion tubulaire centrale, en plus de sa fonction mécanique, peut également être mise à profit pour la canalisation du fluide d'usinage.

Selon un autre objet, l'invention vise un procédé de fabrication d'un outil d'usinage tel que décrit précédemment, comportant les étapes suivantes :
- réalisation d'une pièce modèle en matériau sacrificiel, par fabrication additive, correspondant au corps de l'outil d'usinage, avec ladite portion tubulaire centrale, ladite portion tubulaire périphérique, et lesdits bras ;
- réalisation d'un moule par enrobage de la pièce modèle avec un matériau réfractaire déposé sur la surface de la pièce modèle, entre la portion tubulaire centrale et la portion tubulaire périphérique, et à l'intérieur du conduit formé par la portion tubulaire centrale ;
- évacuation du matériau de la pièce modèle ;
- moulage du corps de l'outil d'usinage par coulée d'un métal dans le moule.

Le procédé de fabrication de l'outil d'usinage selon l'invention garantit un cout de production fortement abaissé. Les formes particulières de cet outil d'usinage, telles que la ou les arches de liaison sont avantageusement réalisées grâce à la fabrication additive.

Ce procédé selon l'invention permet de produire le corps de l'outil d'usinage, rapidement, facilement, et à faible cout, sans nécessiter de noyaux de moulage ou d'autres opérations complexes.

Le procédé selon l'invention se réfère avantageusement à la fabrication additive métallique indirecte, dans laquelle une pièce modèle est produite par fabrication additive et cette pièce modèle est elle-même utilisée pour la production d'un moule destiné à la production par moulage de l'outil. La production de la pièce modèle par fabrication additive bénéficie de tous les avantages connus d'un tel procédé, tels que : la possibilité de réaliser des formes complexes ; la gestion facilitée des problématiques d'évidement ; ces avantages étant répercutés sur la pièce métallique finale.

L'outil d'usinage selon l'invention peut comporter les caractéristiques additionnelles suivantes, seules ou en combinaison :
- la portion tubulaire périphérique comporte deux arches de liaison reliant le premier bras et le deuxième bras en contournant la portion tubulaire centrale, de part et d'autre de la portion tubulaire centrale, la portion tubulaire centrale et les deux arches de liaison s'inscrivant dans une forme cylindrique à base circulaire ;
- le conduit formé par la portion tubulaire centrale est obturé à l'une de ses extrémités par une tête d'usinage comportant au moins un organe d'usinage ;
- le conduit formé par la portion tubulaire centrale débouche, par son autre extrémité, dans l'embase ;
- le conduit formé par la portion tubulaire centrale est raccordé à des conduits secondaires percés dans le premier bras et le deuxième bras et débouchant à proximité des organes d'usinage du premier bras et du deuxième bras, le conduit tubulaire central et les conduits secondaires formant un conduit fluidiquement étanche adapté à relier un circuit de fluide d'usinage à des bouches de distribution de fluide situées à proximité des organes d'usinage ;
- un déflecteur de fluide est fixé à l'extrémité de chacun des bras et est adapté à dévier un jet de fluide d'usinage de la bouche de distribution de fluide vers l'organe d'usinage ;
- les conduits secondaires comportent : un conduit rectiligne le long de chacun des bras, débouchant par une première extrémité dans le conduit formé par la portion tubulaire centrale et débouchant par une seconde extrémité à l'extrémité du bras correspondant ; un bouchon d'obturation à la seconde extrémité de chaque conduit rectiligne ;
- l'outil d'usinage comporte des perçages transversaux, qui débouchent chacun par une première extrémité dans le conduit rectiligne et dont une seconde extrémité forme une bouche de distribution de fluide ;
- la portion tubulaire périphérique comporte des fenêtres débouchant sur un espace localisé entre la portion tubulaire centrale et la portion tubulaire périphérique ;
- la portion tubulaire centrale comporte un tronçon s'étendant au-delà de la portion tubulaire périphérique et définissant une surface circonférentielle d'équilibrage ;
- l'embase présente une surface circonférentielle d'équilibrage.

Le procédé de fabrication d'outil d'usinage selon l'invention peut comporter les caractéristiques additionnelles suivantes, seules ou en combinaison :
- le matériau sacrificiel constituant la pièce modèle est un matériau fusible, et l'étape d'évacuation du matériau de la pièce modèle est réalisée par fusion de la pièce modèle ;
- l'étape d'évacuation du matériau de la pièce modèle est réalisée par combustion de la pièce modèle.

### PRÉSENTATION DES FIGURES

D'autres caractéristiques et avantages de l'invention ressortiront de la description non limitative qui suit, en référence aux dessins annexés dans lesquels :
- la figure 1 est une vue en perspective d'un outil d'usinage selon l'invention ;
- la figure 2 est une vue de face de l'outil d'usinage ;
- la figure 3 est une vue de côté de l'outil d'usinage ;
- la figure 4 est une vue en perspective plongeante de l'outil d'usinage ;
- la figure 5 est une vue de dessus de l'outil d'usinage ;
- la figure 6 est une vue de face en coupe de l'outil d'usinage ;
- la figure 7 est une vue de dessus en coupe de l'outil d'usinage ;
- la figure 8 représente en perspective un déflecteur de fluide d'usinage de l'outil d'usinage ;
- la figure 9 représente une pièce modèle mise en œuvre dans le cadre du procédé de fabrication de l'outil d'usinage des figures 1 à 7 ;
- la figure 10 représente le corps de l'outil d'usinage, obtenu par moulage et usinages de finitions.

### DESCRIPTION DÉTAILLÉE

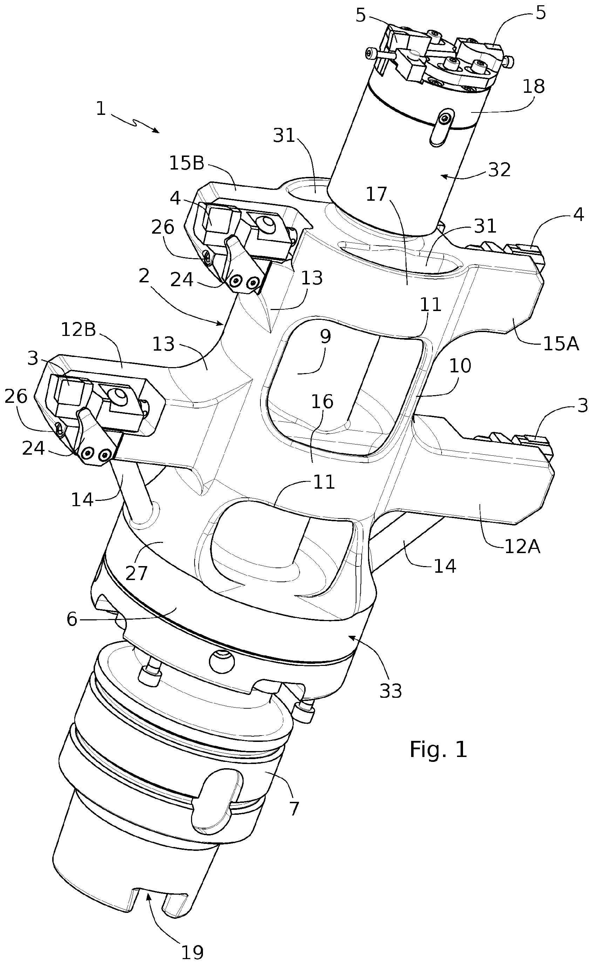

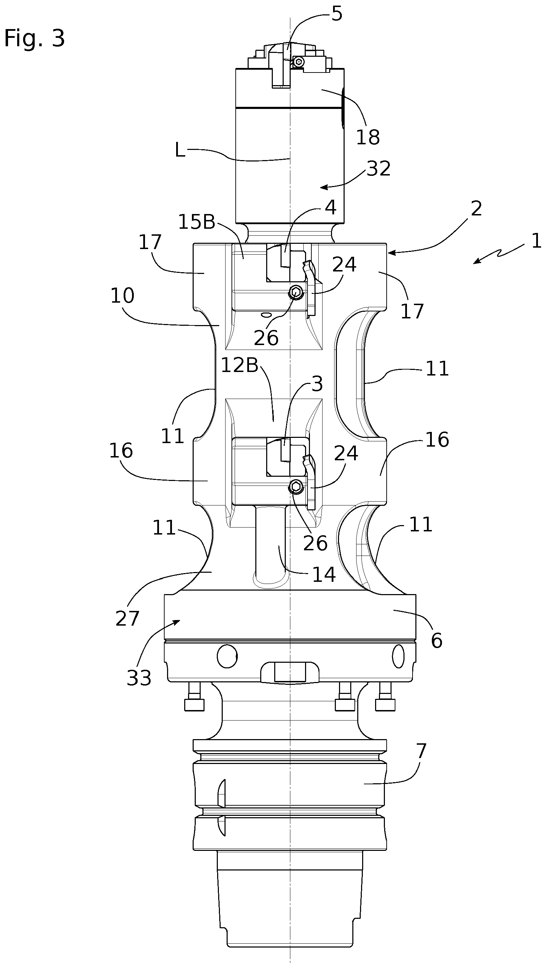

Les figures 1 à 3 sont des vues générales d'un outil d'usinage 1 selon l'invention, respectivement vu en perspective, de face, et de côté.

L'outil d'usinage 1 comporte un corps 2 sur lequel sont fixés, dans le présent exemple illustratif, 6 organes d'usinage 3, 4, 5.

Cet outil d'usinage 1 est destiné à être fixé sur la broche d'une machine-outil et comporte un axe longitudinal L. L'outil d'usinage 1 est destiné à être mis en rotation relative par rapport à une pièce à usiner, autour de l'axe longitudinal L. La rotation relative entre l'outil d'usinage 1 et la pièce à usiner peut être réalisée par la rotation de l'outil d'usinage 1 autour de l'axe L tandis que la pièce est maintenue fixe dans un montage d'usinage, ou par la rotation de la pièce à usiner autour de l'axe longitudinal L et le maintien fixe de l'outil d'usinage 1, ou encore par la rotation en sens opposé de la pièce à usiner et de l'outil usinage, autour de l'axe longitudinal L.

L'outil d'usinage 1 comporte ici une embase 6 comportant des moyens de fixation sur une broche de machine-outil. Ces moyens de fixation permettent la fixation directe de l'outil 1, ou, comme dans l'exemple illustré, par l'intermédiaire d'une pièce d'adaptation 7 permettant la fixation et l'entrainement en rotation de l'outil d'usinage 1 par une broche d'une machine-outil donnée. L'outil d'usinage 1 peut être fixé par son embase 6 sur toute pièce d'adaptation 7, notamment celles normalisées.

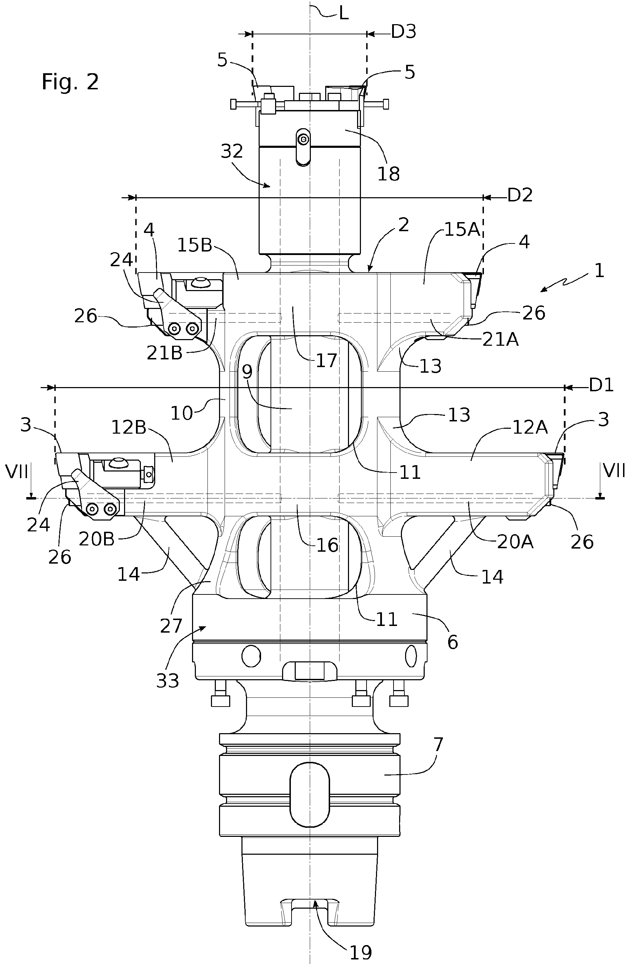

L'outil d'usinage 1 de cet exemple permet l'usinage simultané de trois alésages de diamètres différents au sein d'une pièce avec la même référence de prise de pièce. La figure 2 illustre le diamètre D1 usiné par un premier étage d'usinage, le diamètre D2 usiné par un deuxième étage d'usinage, et le diamètre D3 usiné par une tête d'usinage 18.

L'outil d'usinage 1 comporte un corps 2 qui s'étend selon la direction longitudinale L et qui comporte une portion tubulaire centrale 9 et une portion tubulaire périphérique 10.

La portion tubulaire centrale 9 est ici constituée d'un tube de section circulaire dont la section interne est constante.

La portion tubulaire périphérique 10 s'étend suivant les contours d'un cylindre à base circulaire qui est coaxial à la portion tubulaire centrale 9. La potion tubulaire 10 est ajourée, c'est-à-dire que ce cylindre comporte des fenêtres 11 pratiquées dans sa paroi.

L'outil d'usinage 1 comporte un premier étage d'usinage qui comprend un premier bras 12A et un deuxième bras 12B qui s'étendent de part et d'autre de la portion tubulaire centrale 9. Dans cet exemple, les deux bras 12A, 12B s'étendent selon des directions parallèles.

Chaque bras 12A, 12B s'étend depuis la portion tubulaire centrale 9 en traversant la portion tubulaire périphérique 10. Les bras 12A, 12B sont ainsi solidaires à la fois de la portion tubulaire centrale 9 et de la portion tubulaire périphérique 10. Les bras 12A, 12B sont reliés par des congés 13 aux faces internes et aux faces externes de la portion tubulaire périphérique 10, ainsi qu'à la face externe de la portion tubulaire centrale 9. La portion tubulaire périphérique 10 est également reliée à l'embase 6 par un congé circonférentiel 27. De manière classique en mécanique, ces congés 13, 27 permettent de réduire les concentrations de contraintes, tout en maintenant le caractère tubulaire des portions 9, 10.

Le premier étage d'usinage étant, dans cet exemple, destiné à l'usinage d'alésages de fort diamètres, il comporte ici deux poutres de renfort 14 reliant les bras 12A, 12B à la portion tubulaire périphérique 10, au niveau de sa jonction avec l'embase 6, et contribuant au support de la charge axiale lors de l'usinage, ainsi qu'à la limitation de la flexion des bras 12A, 12B.

L'embase 6 relie par ailleurs la portion tubulaire centrale 9 et la portion tubulaire périphérique 10, la base de la portion tubulaire centrale 9 étant solidaire de l'embase 6 et la base de la portion tubulaire périphérique 10 étant également solidaire de l'embase 6.

Les bras 12A, 12B comportent chacun à leur extrémité un organe d'usinage 3 qui est ici constitué d'une plaquette d'usinage classique et son porte plaquette, ou tout autre moyen de support. Alternativement, les organes d'usinage 3 peuvent être constitués de plaquettes d'usinage brasées sur les bras 12A, 12B. Les organes d'usinage 3 comportent à leur extrémité une ou plusieurs arêtes de coupe.

Dans le présent exemple, l'outil d'usinage 1 comporte de plus un deuxième étage d'usinage comportant deux bras 15A, 15B qui sont de construction similaire au premier étage d'usinage. Les deux bras 15A, 15B comportent ainsi chacun à leur extrémité un organe d'usinage 4. Ils s'étendent de part et d'autre de la portion tubulaire centrale 9 en étant chacun solidaire de la portion tubulaire centrale 9 et de la portion périphérique 10, en s'y rattachant par des congés 13.

Les bras 15A, 15B du deuxième étage d'usinage sont, dans cet exemple, prévus pour un diamètre D2 inférieur au diamètre D1 relatif au premier étage d'usinage. Les bras 15A, 15B sont donc plus courts et ne nécessitent ici pas de poutre de renfort.

La construction à double portion tubulaire 9, 10 de l'outil d'usinage 1 prévoit de plus quatre fenêtres 11 dont une paire est disposée entre le premier étage d'usinage et le deuxième étage d'usinage et une autre paire est disposée entre le premier étage d'usinage et l'embase 6. Chaque fenêtre 11 débouche sur un espace vide séparant la portion tubulaire centrale 9 de la portion tubulaire périphérique 10.

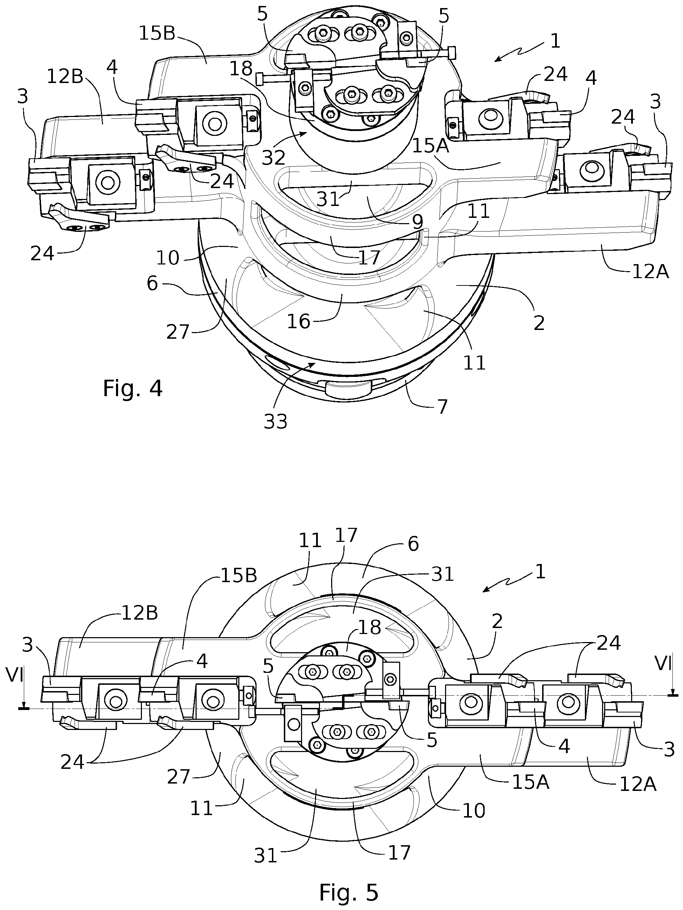

La figure 4 est une vue en perspective plongeante montrant l'outil d'usinage 1 par le dessus, et la figure 5 est une vue de dessus de l'outil d'usinage 1. Ces figures illustrent notamment deux arches de liaison 16 qui sont prévues sur la portion tubulaire périphérique 10, au niveau du premier étage d'usinage et deux autres arches de liaison 17 prévues au niveau du deuxième étage d'usinage. Ces arches de liaison 16, 17 relient le premier et le deuxième bras 12A, 12B ; 15A, 15B de chacun des étages d'usinage.

Les arches de liaison 16,17 des deux étages d'usinage s'inscrivent dans un même cylindre à base circulaire qui est ici le même cylindre défini par la portion tubulaire périphérique 10.

Les arches de liaison 17 du deuxième étage d'usinage définissent de plus deux fenêtres supérieures 31 qui donnent accès à l'espace situé entre la portion tubulaire centrale 9 et la portion tubulaire périphérique 10.

L'outil d'usinage 1 comporte de plus une tête d'usinage 18 fixée à l'extrémité de la portion tubulaire centrale 9. Deux organes d'usinage 5 sont fixés sur cette tête d'usinage 18, qui constitue ainsi le troisième étage d'usinage, relatif au diamètre D3. La tête d'usinage 18 peut recevoir tout autre organe d'usinage, comme une fraise trois tailles adaptées à usiner aussi bien le diamètre D3 qu'une face de fond de cet alésage, ou encore un foret.

Tous les organes d'usinage 3, 4, 5 de l'outil 1 sont fixés de manière classique sur le corps 2 par des vis de fixation et des vis de réglage.

Les 3 diamètres D1, D2, et D3 sont ainsi usinés simultanément en une seule passe relative à une seule prise de pièce. Trois alésages coaxiaux sont ainsi usinés avec une grande précision.

La construction de l'outil d'usinage 1 autour de la portion tubulaire centrale 9 et de la portion périphérique 10 permet, en variante, de disposer d'autant d'étages d'usinage que nécessaire pour une pièce particulière tout en usinant un diamètre de référence avec la tête d'usinage 18.

La portion tubulaire centrale 9 et l'embase 6 assurent de plus une fonction relative à l'équilibrage de l'outil 1. L'outil d'usinage 1 pouvant être une pièce de révolution, elle doit être en effet équilibrée en rotation. L'embase 6 présente une surface circonférentielle 33 et la portion tubulaire centrale 9 présente une surface circonférentielle 32, du côté de la tête d'usinage 18, sur un tronçon s'étendant au-delà de la portion tubulaire périphérique 10. Ces surfaces circonférentielles 32, 33 sont ainsi disposées de part et d'autres du tronçon de l'outil 1 qui comporte les portions tubulaires 9, 10, coaxiales. Ces surfaces circonférentielles 32, 33 offrent une aire permettent un enlèvement ou un ajout de masse à des positions angulaires définies lors d'un équilibrage de l'outil d'usinage 1.

L'outil d'usinage 1 comporte de plus des moyens de canalisation pour un fluide d'usinage distribué sous pression par la machine-outil et injecté dans une entrée de fluide 19. Ces moyens de canalisation acheminent le fluide d'usinage au travers du corps 2 de l'outil 1 en vue de le distribuer sous forme de jets dirigés sur les arêtes de coupe des organes d'usinage 3, 4 du premier et du deuxième étage d'usinage en vue du refroidissement et de la lubrification durant les opérations d'usinage. La figure 2 illustre en pointillés les canalisations internes au corps 2 de l'outil d'usinage raccordant l'entrée de fluide 19 à des sorties de fluide à chaque extrémité des bras 12A, 12B ; 15A, 15B. Le conduit formé par la portion tubulaire centrale 9 comporte ainsi à l'une de ses extrémités des moyens de raccordement à un circuit de fluide d'usinage de la machine-outil.

Dans cet exemple, la tête d'usinage 18 est dépourvue d'irrigation en fluide d'usinage compte tenu de son diamètre. En variante, tout étage d'usinage, y compris la tête d'usinage 18, peut être munie d'une irrigation en fluide d'usinage. Pour munir la tête d'usinage 18 d'une irrigation en fluide d'usinage, un conduit peut être percé dans la tête d'usinage de manière à déboucher dans le conduit formé par la portion tubulaire centrale. Le conduit formé par la portion tubulaire centrale 9 est à même de distribuer le fluide d'usinage à tous les étages de l'outil, ainsi qu'à la tête d'usinage 18.

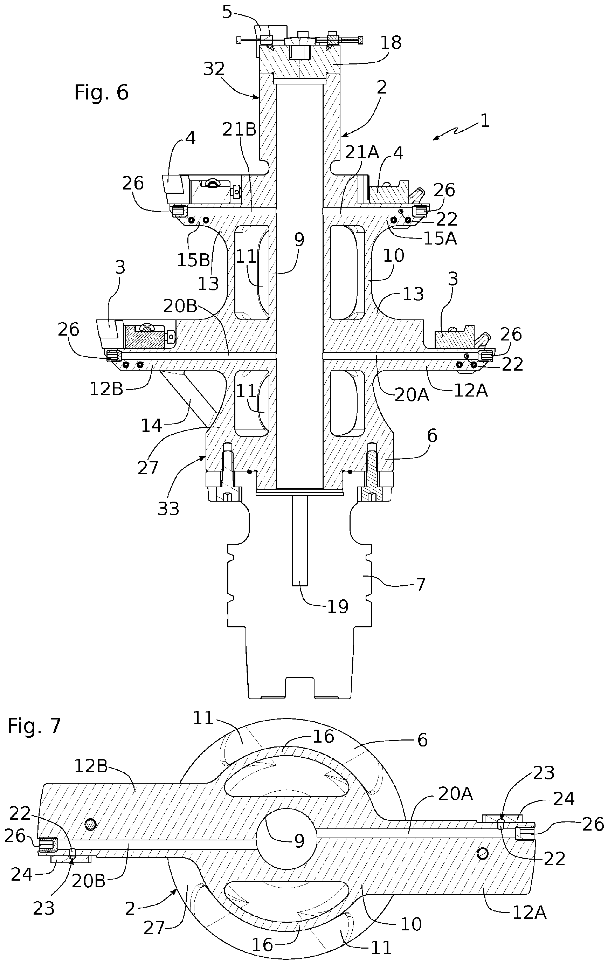

La figure 6, qui est une vue selon la coupe VI-VI de la figure 5, et la figure 7, qui est une vue selon la coupe VII-VII de la figure 2, montrent les moyens de canalisation du fluide d'usinage. La portion tubulaire centrale 9 forme un conduit cylindrique dont le diamètre interne est constant et qui débouche par l'une de ses extrémités dans l'embase 6. Ce conduit est raccordé à l'entrée de fluide 19 (dans le présent exemple, ce raccordement se fait par l'intermédiaire de la pièce d'adaptation 7). Le conduit formé par la portion tubulaire centrale 9 est obturé par la tête d'usinage 18 qui forme un bouchon, avec des moyens d'étanchéité, à l'extrémité de la portion tubulaire centrale 9.

Les moyens de canalisation comportent de plus deux canaux 20A, 20B s'étendant dans chacun des bras 12A, 12B du premier étage d'usinage, ainsi que deux canaux 21A, 21B s'étendant dans les deux bras 15A, 15B du deuxième étage d'usinage. Ces canaux sont réalisés par des perçages de diamètre constant qui débouchent par leur première extrémité dans le conduit formé par la portion tubulaire centrale 9, et débouchent par leur deuxième extrémité à l'extrémité du bras correspondant. Cette deuxième extrémité est obturée par un bouchon 26 étanche au fluide d'usinage.

À l'extrémité de chacun des bras 12A, 12B ; 15A, 15B, les moyens de canalisation comportent un perçage 22 transversal qui débouche dans le canal 20A, 20B, 21A, 21B correspondant, perpendiculairement à ce canal, et qui débouche à l'autre extrémité en une bouche 23 de distribution de fluide.

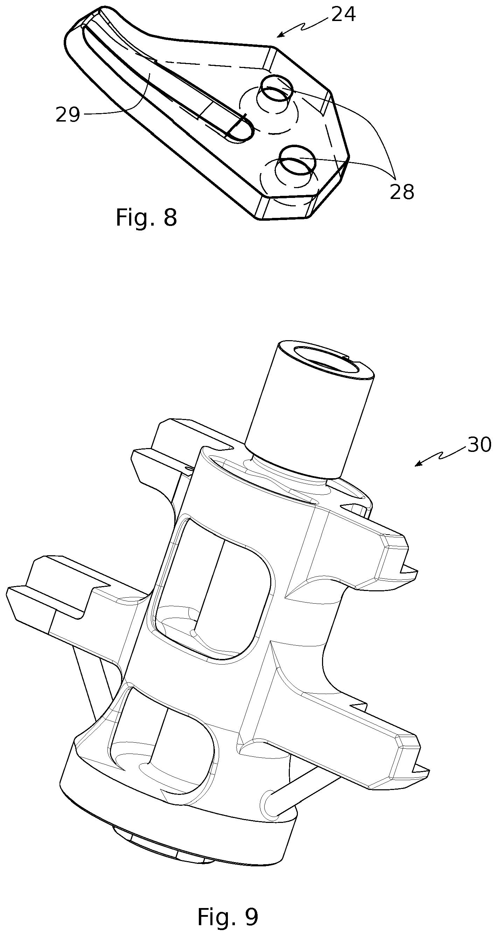

Chaque bouche de distribution de fluide 23 est associée à un déflecteur 24 qui permet de distribuer le fluide d'usinage sortant de la bouche 23 précisément sur l'arête de coupe de l'organe d'usinage 3, 4 correspondant. Un déflecteur 24 est illustré seul à la figure 8. Chaque déflecteur 24 comporte des trous de fixation 28 ainsi qu'une rainure 29 de déflexion du fluide d'usinage.

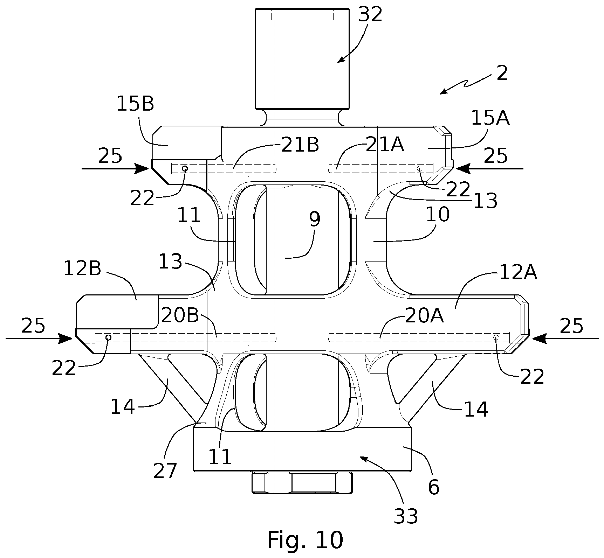

La construction de l'outil d'usinage 1 conduit à un outil léger et performant, et permet également la fabrication de cet outil 1 à faible cout. Un procédé par fabrication additive métallique indirecte, particulièrement avantageux, est décrit en référence aux figures 9 et 10.

En référence à la figure 9, selon une première étape du procédé de fabrication, une pièce modèle 30 correspondant au corps 2 de l'outil 1 est réalisée dans un matériau sacrificiel tel que ceux adaptés au moulage à cire perdue. La pièce modèle 30 est réalisée par un procédé de fabrication additive, tel que par exemple une impression 3D de type « FDM » (Fused Déposition Modeling, en anglais) ou tout autre procédé de fabrication additive adapté. En plus des formes de la pièce modèle 30 qui sont illustrées sur la figure 9, et qui correspondent à la géométrie du corps 2 additionnées de surépaisseurs de moulage, la pièce modèle 30 comporte avantageusement en supplément des formes définissant des canaux de coulée pour le moulage du corps 2 (non représentés).

Selon une deuxième étape, un moule est constitué par enrobage de la pièce modèle 30 avec un matériau réfractaire déposé sur la surface de la pièce modèle 30.

Le matériau réfractaire est déposé notamment entre la portion tubulaire centrale et la portion tubulaire périphérique, et à l'intérieur du conduit formé par la portion tubulaire centrale, ce qui constitue une empreinte qui définira le moule lorsque le modèle sera évacué de la carapace réfractaire ainsi formée.

La réalisation en double portion tubulaire 9, 10 est particulièrement propice au dépôt du matériau constituant le moule aussi bien dans les espaces interstitiels entre les portions tubulaires 9, 10, que sur la paroi interne de la portion tubulaire centrale 9. L'intérieur du conduit formé par la portion tubulaire centrale 9 peut ainsi être revêtu de matériau réfractaire d'un bout à l'autre. Pour les espaces entre les portions tubulaires, ces derniers sont accessibles par les fenêtres 11 qui délimitent également les arches de liaison 16, 17, ainsi que par les fenêtres supérieures 31.

La production du moule par dépôt de matériau réfractaire inclus la création de canaux de coulée autour de la pièce modèle, si cette dernière est pourvue de formes à cet effet.

Cette opération permet ensuite, après une opération d'évacuation du matériau constituant la pièce modèle 30, d'obtenir un moule en matériau réfractaire adapté à une opération de moulage optimisée, qui peut se passer de noyaux de moulage. L'évacuation du matériau sacrificiel constituant la pièce modèle 30 peut être réalisée par fusion, lorsque ce matériau est un matériau fusible, ou par combustion du matériau, et évacuation de ses cendres.

Le moule ainsi réalisé permet ensuite de mouler le corps 2 dans un alliage métallique, par exemple une nuance d'acier adaptée, pour obtenir un corps 2 brut qui correspond à la pièce modèle de la figure 9.

Les moyens de canalisation sont ensuite finalisés de manière simple et rapide uniquement par deux opérations pour chacun des bras 12A, 12B, 15A, 15B :
- un perçage 25 (voir figure 10) depuis l'extrémité du bras, ce perçage débouchant dans la partie interne de la portion tubulaire centrale 9, et définissant le canal 20A, 20B, 21A, 21B ;
- un perçage 22 transversal au précédent perçage, qui définit la bouche 23 de distribution de fluide, et qui débouche dans le canal 20A, 20B, 21A, 21B.

Les extrémités des canaux 20A, 20B, 21A, 21B reçoivent ensuite les bouchons 26.

La fabrication de l'outil est complétée par des opérations telles que : des usinages de référence tels que ceux visant les surfaces recevant les organes d'usinage 3, 4, 5, ; des usinages relatifs aux moyens de fixation sur la broche d'une machine-outil. La fabrication de l'outil d'usinage 1 est ensuite finalisée par la fixation de la tête d'usinage 18 qui forme un bouchon pour la portion tubulaire centrale 9, par la fixation des divers organes d'usinage 3, 4, 5, et par la fixation des déflecteurs 24. Les déflecteurs 24 peuvent également être réalisés par un procédé de moulage de type à cire perdue (ou tout autre procédé adéquat) pour être ensuite rapportés sur le corps 2.

L'extrémité de la portion tubulaire centrale 9, ainsi que l'embase 6 sont également finalisées dans le cadre de leur fonction d'équilibrage : des usinages (enlèvement de masse) ou des taraudages (ajout de masse par pose d'une vis) sont réalisés à des positions angulaires déterminées, aussi bien sur la surface circonférentielle 32 que sur la surface circonférentielle 33, afin d'obtenir un outil d'usinage 1 équilibré en rotation, statiquement et/ou dynamiquement.

Des variantes de réalisation de l'outil d'usinage 1 décrit précédemment peuvent être envisagées. Notamment, l'outil d'usinage peut comporter autant d'étages d'usinage que nécessaires pour un type d'usinage particulier ou une pièce à usiner particulière. De même, un étage d'usinage peut comporter autant de bras que nécessaire à une application donnée.

## Revendications

1. Outil d'usinage (1) comportant : un corps (2) s'étendant selon un axe longitudinal (L) autour duquel l'outil d'usinage est destiné à être mis en rotation relative par rapport à une pièce à usiner ; et au moins un organe d'usinage solidaire du corps ; cet outil d'usinage étant **caractérisé en ce que** le corps (2) comporte :
- une portion tubulaire centrale (9) formant un conduit centré sur l'axe longitudinal (L) ;
- une portion tubulaire périphérique (10) qui est coaxiale à la portion tubulaire centrale (9) et qui entoure la portion tubulaire centrale (9) ;
- un premier étage d'usinage comportant un premier bras (12A) et un deuxième bras (12B) qui s'étendent de part et d'autre de la portion tubulaire centrale (9), le premier bras (12A) et le deuxième bras (12B) comportant chacun à leur extrémité un organe d'usinage (3), le premier bras (12A) et deuxième bras (12B) étant chacun solidaire de la portion tubulaire centrale (9) et de la portion tubulaire périphérique (10) ;
- une embase (6) reliant la portion tubulaire centrale (9) et la portion tubulaire périphérique (10), cette embase (6) comportant des moyens de fixation sur une broche de machine-outil ;
et **en ce que** la portion tubulaire périphérique (10) comporte au moins une arche de liaison (16) reliant le premier bras (12A) et le deuxième bras (12B) en contournant la portion tubulaire centrale (9).

2. Outil d'usinage selon la revendication 1, **caractérisé en ce que** la portion tubulaire périphérique (10) comporte deux arches de liaison (16) reliant le premier bras (12A) et le deuxième bras (12B) en contournant la portion tubulaire centrale (9), de part et d'autre de la portion tubulaire centrale (9), la portion tubulaire centrale (9) et les deux arches de liaison (16) s'inscrivant dans une forme cylindrique à base circulaire.

3. Outil d'usinage selon l'une des revendications précédentes, **caractérisé en ce que** le conduit formé par la portion tubulaire centrale (9) est obturé à l'une de ses extrémités par une tête d'usinage (18) comportant au moins un organe d'usinage (5).

4. Outil d'usinage selon la revendication 3, **caractérisé en ce que** le conduit formé par la portion tubulaire centrale (9) débouche, par son autre extrémité, dans l'embase (6).

5. Outil d'usinage selon l'une des revendications précédentes, **caractérisé en ce que** le conduit formé par la portion tubulaire centrale (9) est raccordé à des conduits secondaires (20A, 20B, 22) percés dans le premier bras (12A) et le deuxième bras (12B) et débouchant à proximité des organes d'usinage (3) du premier bras (12A) et du deuxième bras (12B), le conduit tubulaire central (9) et les conduits secondaires (20A, 20B, 22) formant un conduit fluidiquement étanche adapté à relier un circuit de fluide d'usinage à des bouches (23) de distribution de fluide situées à proximité des organes d'usinage (3).

6. Outil d'usinage selon la revendication 5, **caractérisé en ce qu'**il comporte un déflecteur de fluide (24) qui est fixé à l'extrémité de chacun des bras (12A, 12B) et qui est adapté à dévier un jet de fluide d'usinage de la bouche (23) de distribution de fluide vers l'organe d'usinage (3).

7. Outil d'usinage selon l'une des revendications précédentes, **caractérisé en ce que** les conduits secondaires comportent :
- un conduit rectiligne (20A, 20B) le long de chacun des bras (12A, 12B), débouchant par une première extrémité dans le conduit formé par la portion tubulaire centrale (9) et débouchant chacun par une seconde extrémité à l'extrémité du bras correspondant ;
- un bouchon d'obturation (26) à la seconde extrémité de chaque conduit rectiligne (20A, 20B).

8. Outil d'usinage selon la revendication 7, **caractérisé en ce qu'**il comporte des perçages transversaux (22), qui débouchent chacun par une première extrémité dans le conduit rectiligne (20A, 20B) et dont une seconde extrémité forme une bouche (23) de distribution de fluide.

9. Outil d'usinage selon l'une des revendications précédentes, **caractérisé en ce que** la portion tubulaire périphérique (10) comporte des fenêtres (11) débouchant sur un espace localisé entre la portion tubulaire centrale (9) et la portion tubulaire périphérique (10).

10. Outil d'usinage selon l'une des revendications précédentes, **caractérisé en ce que** la portion tubulaire centrale (9) comporte un tronçon s'étendant au-delà de la portion tubulaire périphérique (10) et définissant une surface circonférentielle (32) d'équilibrage.

11. Outil d'usinage selon l'une des revendications précédentes, **caractérisé en ce que** l'embase (6) présente une surface circonférentielle (33) d'équilibrage.

12. Procédé de fabrication d'un outil d'usinage selon l'une des revendications 1 à 11, **caractérisé en ce qu'**il comporte les étapes suivantes :
- réalisation d'une pièce modèle (30) en matériau sacrificiel, par fabrication additive, correspondant au corps (2) de l'outil d'usinage (1), avec ladite portion tubulaire centrale (9), ladite portion tubulaire périphérique (10), et lesdits bras (12A, 12B) ;
- réalisation d'un moule par enrobage de la pièce modèle (30) avec un matériau réfractaire déposé sur la surface de la pièce modèle (30), entre la portion tubulaire centrale (9) et la portion tubulaire périphérique (10), et à l'intérieur du conduit formé par la portion tubulaire centrale (9) ;
- évacuation du matériau de la pièce modèle (30) ;
- moulage du corps (2) de l'outil d'usinage (1) par coulée d'un métal dans le moule.

13. Procédé selon la revendication 12, **caractérisé en ce que** le matériau sacrificiel constituant la pièce modèle (30) est un matériau fusible, et **en ce que** l'étape d'évacuation du matériau de la pièce modèle (30) est réalisée par fusion de la pièce modèle (30).

14. Procédé selon la revendication 12, **caractérisé en ce que** l'étape d'évacuation du matériau de la pièce modèle (30) est réalisée par combustion de la pièce modèle (30).
